# FASCICULE DE BREVET EUROPEEN

(11) **EP 3 694 680 B1**
(45) Date de publication et mention de la délivrance du brevet: **05.10.2022**
(21) Numéro de dépôt: 18793257.9
(22) Date de dépôt: 08.10.2018
(51) Int. Cl.: B23K 23/00, B22C 9/10, B22D 19/04, B23K 101/26

(54) **ENSEMBLE DE MOULAGE POUR LA SOUDURE ALUMINOTHERMIQUE DE RAILS ET PROCÉDÉ DE SOUDURE ALUMINOTHERMIQUE DE RAILS**
GIESSFORM ZUR ZWISCHENGUSSVERSCHWEISSUNG VON SCHIENEN UND METHODE ZUR ZWISCHENGUSSVERSCHWEISSUNG VON SCHIENEN
CASTING MOULD ASSEMBLY FOR ALUMINO-THERMIC WELDING OF RAILS AND METHOD OF ALUMINO-THERMIC WELDING OF RAILS

(30) Priorité: 09.10.2017 FR 1759449
(43) Date de publication de la demande: 19.08.2020
(73) Titulaire: Pandrol, 59 590 Raismes (FR)
(72) Inventeur: DEMOND, Nicolas, 59800 Lille (FR); MERESSE, Clément, 59530 Potelle (FR); SANTOS, Thiago, 59800 Lille (FR)
(74) Mandataire: Regimbeau
(86) Numéro de dépôt international: PCT/FR2018/052467
(87) Numéro de publication internationale: WO 2019/073151

(56) Documents cités:
- EP-A1- 0 000 456
- EP-A1- 2 956 235
- DE-A1- 1 758 487
- DE-C- 568 368
- FR-A1- 2 323 488
- US-A- 3 113 359

## Description

### DOMAINE DE L'INVENTION

La présente invention concerne un ensemble de moulage de soudure aluminothermique et un procédé de soudure aluminothermique de profilés métalliques, en particulier des rails, mettant en oeuvre un tel ensemble de moulage.

### ETAT DE LA TECHNIQUE

La soudure aluminothermique de deux profilés métalliques consiste à aligner les deux profilés métalliques afin que leurs abouts soient en face l'un de l'autre, puis à couler un métal en fusion dans l'espace qui sépare les abouts afin de souder les profilés.

Pour réaliser la soudure, on utilise un moule comprenant plusieurs parties venant enserrer les profilés métalliques, formant ainsi une cavité de moulage contenant les abouts des profilés métalliques à souder et destinée à recevoir le métal en fusion.

Ce type de soudure est le plus souvent mis en œuvre pour la soudure de rails métalliques, et en particulier de rails de chemin de fer.

Du fait de la structure du moule en plusieurs parties, et d'écarts dimensionnels existant entre les rails métalliques à souder et le moule, les jointures entre les parties du moule d'une part, et entre une partie du moule et les rails métalliques d'autre part, ne sont pas parfaites, et il est donc nécessaire de rendre le moule étanche avant de couler le métal.

Cette opération, appelée « lutage », est classiquement réalisée par application d'une pâte ou d'un enduit, de sable, ou encore d'un liant appliqué avec un pistolet extrudeur, dans des interstices à combler, avant ou après la mise en place du moule autour des rails métalliques à souder. Ces produits de lutage possèdent des propriétés réfractaires, c'est-à-dire qu'ils sont aptes à résister au contact du métal en fusion lorsque celui-ci est coulé dans la cavité de moulage, et donnent généralement de bons résultats d'étanchéité.

À partir de US3113359A, on connaît un tel ensemble et une telle méthode, qui constituent la base du préambule des revendications 1 et 9. Cependant, l'application de ces produits de lutage est longue et laborieuse puisqu'ils nécessitent d'être déposés avec une grande précision pour s'assurer d'une étanchéité optimale du moule. Cela génère aussi un coût financier supplémentaire pour réaliser la soudure, dû à l'achat et au transport du produit de lutage, allant parfois jusqu'à représenter plusieurs kilogrammes par soudure.

Les produits de lutage génèrent par ailleurs une certaine quantité de déchets qu'il est nécessaire d'évacuer et de traiter, ce qui a un impact négatif sur l'environnement.

### EXPOSE DE L'INVENTION

L'invention a donc pour but de remédier aux inconvénients de l'art antérieur en proposant ensemble de moulage comprenant un moule de soudure aluminothermique de rails métalliques dont le lutage est effectué aisément et rapidement.

L'invention a également pour but de proposer un tel ensemble de moulage dont le lutage du moule est réalisé avec un coût financier réduit et engendre une quantité de déchets moindre, comparativement aux moules de l'état de l'art.

Un autre but de l'invention est de proposer un procédé de soudure aluminothermique de rails métalliques qui met en oeuvre un tel ensemble de moulage.

À cette fin, l'invention concerne un ensemble de moulage pour la soudure aluminothermique de rails métalliques, comprenant au moins une pièce de moule configurée pour venir au contact d'au moins une autre pièce de moule et des rails à souder afin de former une empreinte de moulage dans laquelle sont agencés les abouts des rails métalliques à souder et dans laquelle est coulé un métal en fusion pour réaliser la soudure des rails métalliques, l'ensemble de moulage étant principalement caractérisé en ce que chaque pièce de moule comprend une portée configurée pour être placée au contact d'au moins un desdits rails, ladite portée comprenant une gorge dans laquelle est appliqué un produit de lutage en un matériau intumescent.

De manière optionnelle, l'ensemble de moulage selon l'invention peut comprendre les caractéristiques suivantes :
- la gorge comprend :
   - une bordure interne, configurée pour fermer l'empreinte de moulage,
   - une bordure externe configurée pour séparer la gorge de l'extérieur du moule,
   - un fond qui s'étend en regard des rails à souder, et qui relie la bordure interne et la bordure externe.
- le produit de lutage est en retrait par rapport à la portée, relativement au rail ;
- la portée est pourvue d'un revêtement réfractaire compressible apte à venir au contact du rail lors du montage du moule, le produit de lutage étant appliqué sur ledit revêtement réfractaire compressible ;
- la pièce de moule comprend une pièce de fond ;
- le produit de lutage se présente sous la forme d'une bande ;
- la bande est une bande thermoformée ou une bande obtenue par moulage ;
- la bande est conformable à la pièce de moule ;
- le matériau intumescent est choisi parmi une ou plusieurs des substances chimiques suivantes : silicate de sodium, silicate de calcium, phosphate d'ammonium, et co-graphite extrudé.

Un autre objet de l'invention concerne un procédé de soudure aluminothermique de rails métalliques, dans lequel les abouts des rails métalliques à souder sont agencés dans une empreinte de moulage d'un moule de soudure aluminothermique, ledit moule comprenant au moins deux pièces de moule configurées pour venir au contact l'une de l'autre et des rails à souder afin de former ladite empreinte de moulage, chaque pièce de moule comprenant une portée configurée pour être placée au contact d'au moins un desdits rails, ladite portée comprenant une gorge, le procédé comprenant une étape de coulée d'un métal en fusion dans l'empreinte de moulage, le procédé étant principalement caractérisé en ce qu'il comprend, préalablement à l'étape de coulée du métal dans l'empreinte de moulage, une étape d'application d'un produit de lutage fabriqué dans un matériau intumescent dans la gorge.

De manière optionnelle, le procédé selon l'invention peut comprendre les caractéristiques suivantes :
- le procédé comprend une étape de préchauffage du moule préalablement à l'étape de coulée du métal dans l'empreinte de moulage, le produit de lutage étant appliqué avant ladite étape de préchauffage ;
- le produit de lutage est appliqué avant l'assemblage des pièces du moule avec le rail pour former l'empreinte de moulage ;
- le produit de lutage est appliqué de manière à être en retrait par rapport à la portée, relativement au rail ;
- la portée étant pourvue d'un revêtement réfractaire compressible apte à venir au contact du rail lors du montage du moule, le produit de lutage est appliqué sur ledit revêtement réfractaire compressible ;
- le produit de lutage se présente sous la forme d'une bande, le procédé comprenant une étape de mise en forme de la bande préalablement à son application sur une pièce de moule ;
- la bande est une bande thermoformée ou une bande obtenue par moulage ;
- la bande est conformée à la pièce de moule lors de son application ;
- le produit de lutage se présente sous la forme d'un liquide, de préférence choisi parmi du mastic ou de l'enduit ;
- le procédé comprend en outre, avant la coulée du métal en fusion dans l'empreinte de moulage, une étape d'application du liquide sur ladite au moins une surface de la pièce de moule en regard du rail ;
- l'application du liquide est réalisée au moyen d'un pinceau, d'un couteau, d'un pistolet extrudeur, ou d'un piston haute pression ;
- le matériau intumescent comprend du silicate de sodium.

### DESCRIPTION DES FIGURES

D'autres avantages et caractéristiques de l'invention apparaîtront à la lecture de la description suivante donnée à titre d'exemple illustratif et non limitatif, en référence aux Figures annexées qui représentent :
- la Figure 1, un schéma en perspective d'une pièce d'un moule de soudure aluminothermique de rails métalliques, selon un mode réalisation de l'invention ;
- la Figure 2, un schéma en perspective de la pièce de moule illustré sur la Figure 1, laquelle est munie d'un produit de lutage fabriqué dans un matériau intumescent, qui se présente sous la forme d'une bande thermoformable ;
- la Figure 3, un schéma d'une bande thermoformable en matériau intumescent ;
- la Figure 4, un schéma en vue de côté et en coupe d'un moule formé en assemblant deux pièces identiques à celle de la Figure 2 de part et d'autre des abouts des deux rails à souder afin d'enserrer lesdits abouts de rails, selon un mode de réalisation de l'invention ;
- les Figures 5A à 5C, des schémas de principe des étapes successives de mise en place d'une pièce de moule munie d'un revêtement réfractaire compressible de type feutre sur un rail ;
- les Figures 6A à 6D, des schémas de principe des étapes successives de mise en place d'une pièce de moule sans revêtement réfractaire compressible sur un rail ;
- les Figures 7A à 7D, des schémas de principe des étapes successives de mise en place d'une pièce de moule sans revêtement réfractaire compressible, dont la portée comprend une gorge,
- les Figures 8A à 8D, des schémas de gorges de différentes formes,
- la Figure 9, un schéma en perspective d'une pièce de moule, dont la portée comprend des gorges telles qu'illustrées sur les figures 7A à 7D.

### DESCRIPTION DETAILLEE DE MODES DE REALISATION DE L'INVENTION

Un premier objet de l'invention se rapporte à un ensemble de moulage comprenant un moule de soudure aluminothermique de profilés métalliques, et tout particulièrement de rails métalliques.

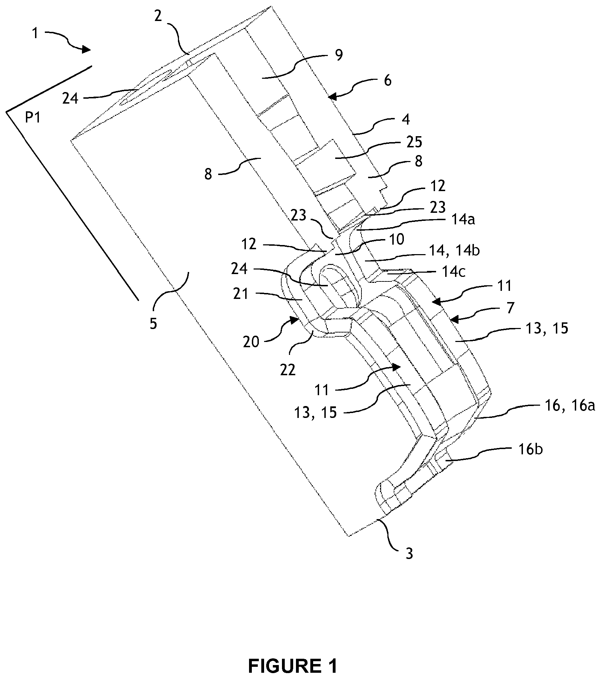

Un tel moule 100 se compose de deux pièces 1 de moule possédant une structure sensiblement identique, dont une pièce est représentée sur la Figure 1 selon un mode de réalisation, et d'une pièce de fond 50. Les deux pièces 1 sont adaptées pour être assemblées l'une avec l'autre, ainsi qu'à la pièce de fond 50, afin de former le moule 100 contenant les abouts 31 des rails à souder 30.

En référence à la Figure 1, chaque pièce 1 de moule comprend une face supérieure 2, une face inférieure 3, et des faces latérales 4, 5 joignant les faces supérieure 2 et inférieure 3. La pièce 1 de moule se compose d'une partie supérieure 6 configurée pour être assemblée à la partie supérieure correspondante d'une seconde pièce de moule, et d'une partie inférieure 7 configurée pour venir au contact des abouts 31 de rails afin de les enserrer.

Les pièces 1 et 50 de moule sont réalisées dans un matériau rigide et réfractaire, c'est-à-dire un matériau possédant une bonne tenue mécanique et qui est apte à résister à de très hautes températures, et en particulier, à la température du métal de soudure à l'état liquide avec lequel elle entre en contact.

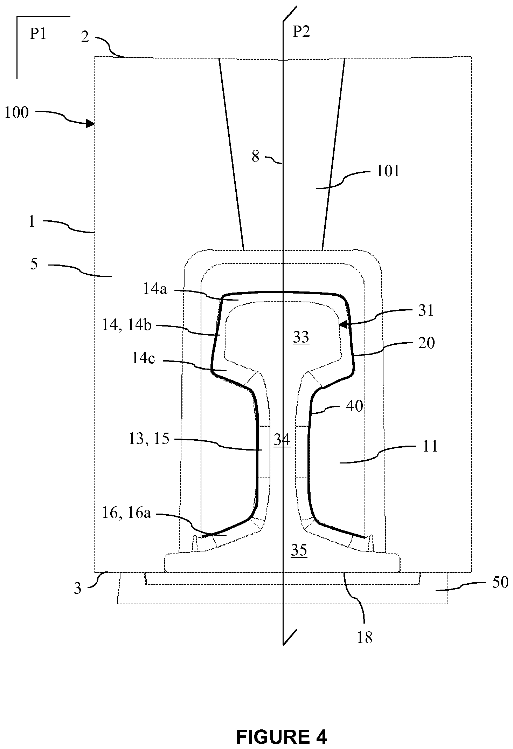

La pièce 1 de moule est creusée dans toute sa longueur, depuis sa face supérieure 2 jusqu'à sa face inférieure 3, de manière à délimiter deux surface latérales internes 9 en regard l'une de l'autre par rapport à un plan longitudinal P1, et reliées par un fond 10. Les faces latérales internes 9 sont elles-mêmes creusées de manière à former, avec le fond 10, une moitié d'une chambre de coulée 101 (représentée sur la Figure 4) du métal de soudure à l'état liquide, ce dernier provenant classiquement d'un creuset en matériau réfractaire agencé au-dessus du canal de coulée.

Les termes directionnels et de positionnement tels que notamment « au-dessus », et « en-dessous », « haut », « bas », « supérieur », ou encore « inférieur » se réfèrent à l'agencement des différents éléments constitutifs des pièces de moule, ou des éléments qui coopèrent avec les pièces de moule, selon une utilisation conventionnelle du moule, dans laquelle les pièces de moule sont montées sur un rail dont le patin repose sur un support (généralement le sol) transversal au plan longitudinal P1 des pièces de moule.

La face frontale 4 de la pièce 1 de moule est munie de deux surfaces de contact 8 destinées à venir au contact des deux surfaces de contact correspondantes de la seconde pièce 1 de moule lors du montage du moule 100.

La partie inférieure 7 de la pièce 1 de moule comprend deux bordures 11, dites bordures internes, qui s'étendent depuis l'extrémité inférieure des surfaces de contact 8 où elles forment des ruptures de pente 12, jusqu'à l'extrémité inférieure de la pièce 1 de moule. Les bordures internes 11 sont délimitées latéralement par les surfaces latérales internes 9 et par les surfaces latérales externes 5 de la pièce de moule.

Chaque bordure interne 11 comprend une portée 13 qui s'étend le long de ladite bordure, configurée pour venir au contact d'un about 31 de rail lors du montage du moule 100. Les portées 13 délimitent, avec les surfaces latérales internes 9 et le fond 10 du moule, une fois ledit moule assemblé représenté sur la Figure 4, une empreinte de moulage 102, ou chambre de moulage, contenant les abouts 31 des rails à souder et l'espace entre les rails 30, et destinée à recevoir le métal liquide en provenance de la chambre de coulée 101.

Les portées peuvent être recouvertes d'un feutre. Le feutre est un matériau bien connu en soit, constitué de fibres réfractaires et compressibles liées par un liant réfractaire, appliqué sur les portées des pièces de moule au moyen d'une colle adaptée, afin de fermer l'empreinte de moulage. On pourra se référer au document WO 2007/031528 pour une description d'un tel moule pourvu de feutre.

Dans la suite de la description, P2 désigne le plan de symétrie longitudinal séparant les rails 30 dans leur longueur en deux côtés de rails situés de part et d'autre de ce plan, le plan P2 étant perpendiculaire au plan P1 et transversal au plan du support des rails 30.

Chacune des deux portées 13 est creusée, de manière à définir une portée haute 14 dont la forme correspond à celle d'un côté du champignon 33 du rail 30, une portée intermédiaire 15 dont la forme correspond à celle d'un côté de l'âme 34 du rail, et une portée basse 16 dont la forme correspond à celle d'un côté du patin 35 du rail.

La portée haute 14 se présente sous la forme d'un renfoncement. Elle comprend une portion haute 14a dont la forme correspond au sommet du champignon 33 du rail 30, une portion intermédiaire 14b dont la forme correspond à un bord latéral du champignon 33, et une portion inférieure 14c dont la forme correspond à la base du champignon 33.

La portée intermédiaire 15 se présente sous la forme d'une avancée dont la forme correspond à celle de l'âme 34 du rail 30.

La portée basse 16 se présente sous la forme d'un renfoncement. Elle comprend une portion haute 16a dont la forme correspond à au sommet du patin 35 du rail 30, et une portion basse 16b dont la forme correspond à un bord latéral du patin 35.

Une bordure interne 11 délimite un renfoncement externe 20 dans la face latérale externe 5 correspondante de la pièce 1 de moule, au niveau de ladite bordure 11. Le renfoncement externe 20 s'étend le long de la bordure 11, c'est-à-dire depuis l'extrémité inférieure des surfaces de contact 8 jusqu'à la face inférieure 3 de la pièce 1 de moule.

Le renfoncement externe 20 est lui-même formé d'une première surface externe 21 qui s'étend depuis la portée 13 de façon perpendiculaire à ladite portée, et une deuxième surface 22 qui s'étend depuis la première surface 21 de façon perpendiculaire à ladite première surface, et de ce fait, de manière sensiblement parallèle à la portée 13.

Un chanfrein 23 est réalisé dans l'angle joignant la surface de la partie supérieure 6 de la pièce et la portée haute 14. La forme du chanfrein 23 correspond au sommet du champignon 33 d'un about de rail.

La pièce 1 de moule comprend en outre une pipe de refroidissement 24 dont l'une des extrémités débouche sur la face supérieure 3 de la pièce de moule vers l'extérieur du moule 100, et l'autre extrémité débouche dans l'empreinte de moulage 102, au niveau de la portée haute 14. Des découpes sont avantageusement aménagées dans les surfaces de contact 8 et dans les faces latérale internes 9, et constituent des passages de circulation du métal de soudure à l'état liquide entre la chambre de coulée 101 du métal et les pipes de refroidissement 24.

Afin de monter le moule 100 représenté sur la Figure 4 et procéder à la soudure des deux abouts des rails, deux pièces 1 de moule telles que celle décrite précédemment sont assemblées sur la pièce de fond 50.

Les surfaces de contact 8 des deux pièces 1 de moule viennent au contact les unes des autres, de part et d'autre du plan P2, formant ainsi la chambre de coulée 101 du métal.

Pour chacune des pièces du moule, les portées 13 de la partie inférieure 7 viennent se placer au contact d'un côté des deux abouts 31 des rails 30 à souder.

Dans cette configuration, le fond 10 des pièces de moule se trouve en regard de l'espace entre les deux abouts de rails.

En détail, une première portée 13 recouvre un premier côté du premier about de rail, une deuxième portée 13 recouvre le premier côté du deuxième about de rail, de manière analogue à la première portée.

Il en est de même respectivement pour la deuxième pièce de moule montée sur le deuxième côté des deux abouts de rails.

Lorsque les deux pièces 1 de moule sont montées sur les abouts 31 de rails à souder, les deux portées 13 de la première pièce de moule montées contre chacun des deux abouts de rail sur un premier côté desdits rails, et les deux portées de la deuxième pièce de moule montées contre chacun des deux abouts de rail sur un deuxième côté desdits rails, forment une empreinte moulage 102 qui s'étend autour des abouts 31 de rails et de l'espace séparant lesdits abouts de rails. L'empreinte de moulage 102 est fermée préférentiellement par la pièce de fond 50 apte à se raccorder à la surface inférieure 3 de chaque pièce 1 de moule, de manière à ce que des portées de ladite pièce de fond 50 se raccordent aux portées 13 respectives des première et deuxième pièces 1 de moule.

Lors de la coulée du métal sous forme liquide dans le moule 100, le métal s'écoule le long de la chambre de coulée 101 jusqu'à l'empreinte de moulage 102 où il comble l'espace entre les abouts 31 afin de souder les rails 30 par réaction aluminothermique. Les vapeurs de métal et des produits de la réaction aluminothermique sont évacués du moule via les pipes de refroidissement 24.

Un produit de lutage 40, fabriqué dans un matériau intumescent, est appliqué sur l'une ou les deux pièces 1 de moule. Il peut être appliqué sur les pièces de moule avant leur assemblage sur les rails à souder ou directement sur le moule 100 assemblé.

Le matériau est dit « intumescent » en ce qu'il est apte à gonfler sous l'effet de la chaleur provoquée par une augmentation de la température du moule, en particulier au sein de l'empreinte de moulage, de manière à former un système expansé qui se présente par exemple sous la forme d'une mousse ou bien d'une coque solide. En pratique, le matériau intumescent est configuré pour s'expanser lors de la mise en oeuvre d'une étape dite de préchauffage réalisée avant la coulée du métal dans le moule, et permettant une montée en température progressive du moule et du rail afin de faciliter la fusion du métal et de retirer l'humidité du moule. L'expansion du matériau intumescent se déclenche lorsque celui-ci est soumis à une température dite « température seuil », dépendant de ses propriétés physiques et chimiques. On veillera donc à ce qui la température seuil soit voisine de la température de préchauffage du moule, préférablement inférieure à ladite température de préchauffage.

De préférence, le matériau intumescent est choisi parmi une ou plusieurs des substances chimiques suivantes : silicate de sodium, silicate de calcium, phosphate d'ammonium, et co-graphite extrudé.

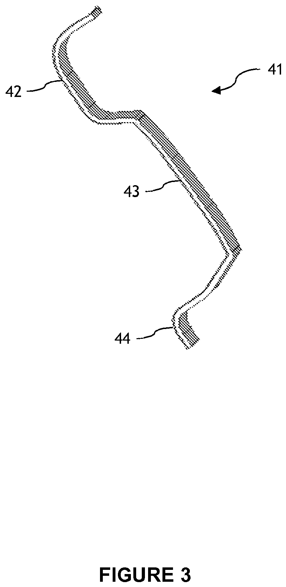

Selon un premier mode de réalisation, le produit de lutage 40 se présente sous la forme d'une bande 41 représentée sur la Figure 3. La bande 41 est mise en forme afin que sa forme corresponde à celle de la surface de la pièce de moule sur laquelle elle doit être appliquée ultérieurement.

La bande 41 peut être thermoformable en ce qu'elle est mise en forme sous haute température, préalablement à son montage sur la pièce 1 ou 50 de moule, la température de mise en forme de la bande étant fonction des caractéristiques physiques et chimiques du matériau intumescent, et étant en pratique bien inférieure à sa température seuil.

Alternativement, la bande 41 peut être moulée afin de présenter la forme souhaitée, puis être appliquée sur la pièce de moule.

La bande 41 peut être souple ou rigide en fonction de la nature de son matériau constitutif et de ses dimensions. On préfèrera cependant une bande souple afin de faciliter la conformation de la bande à la pièce de moule.

Ce premier mode de réalisation offre l'avantage de fournir un produit de lutage « prêt à l'emploi », en ce qu'il suffit d'appliquer la bande 41 déjà formée sur la surface concernée, notamment par collage par exemple, ce qui est simple et rapide à réaliser.

Selon un deuxième mode de réalisation, le produit de lutage 40 se présente sous la forme d'un produit liquide à appliquer sur la pièce de moule. Le terme « liquide » se réfère à un liquide de faible viscosité (par exemple une viscosité voisine de celle de l'eau, soit environ 1*10⁻³ Pa.s) ou de forte viscosité (par exemple une viscosité voisine de celle d'une huile de moteur, soit environ 0,2 Pa.s). On préfèrera cependant une viscosité suffisamment élevée pour pouvoir appliquer facilement le produit sur la ou les surface(s) concernée(s), tout en évitant que le produit ne coule sur d'autres surfaces sur lesquelles il n'est pas prévu de l'appliquer. On veillera aussi à choisir un produit liquide qui nécessite un temps de séchage réduit par rapport à celui de l'opération de moulage.

Le produit liquide est de préférence du mastic ou de l'enduit.

Ce deuxième mode de réalisation offre l'avantage de fournir un produit de lutage 40 pouvant être appliqué sur des zones de formes complexes, sans laisser de zones à protéger pourtant non recouvertes de produit.

Le produit de lutage permet d'isoler l'empreinte de moulage 102 du milieu extérieur, en empêchant le métal liquide de sortir de l'empreinte de moulage pendant l'opération de moulage.

Le produit de lutage est positionné sur au moins une surface de la pièce 1 ou 50 de moule, cette surface étant configurée pour être placée en regard du rail 30 à souder.

Le produit de lutage a tendance à se détériorer lorsqu'il est exposé à une trop forte chaleur, en particulier sur une grande période de temps. Ainsi, on positionne préférentiellement le produit de lutage à distance des abouts de rails, afin qu'il s'expanse pendant l'étape de préchauffage, tout en évitant qu'il ne soit trop exposé à la chaleur et ne se dégrade. Une dégradation trop rapide de la structure physico-chimique du matériau intumescent constitutif du produit de lutage aboutirait en effet à une incapacité du produit de lutage à assurer l'étanchéité du moule jusqu'à solidification du métal.

Le produit de lutage est appliqué sur les pièces de moule de manière à se trouver à proximité de l'empreinte de moulage 102, et de préférence à l'extérieur de ladite l'empreinte de moulage. On assure ainsi l'étanchéité de l'empreinte de moulage 102 tout en évitant un contact direct entre le métal et le produit de lutage lors de la coulée du métal dans le moule 100 qui pourrait provoquer des bavures au niveau de la jonction entre le rail et la surface d'appui du moule contre le rail.

On peut cependant prévoir de positionner le produit de lutage au niveau de la jonction entre le rail et la surface d'appui du moule contre le rail (en particulier sur une portée 13, éventuellement revêtue d'un feutre). Dans ce cas, le produit de lutage est susceptible de rentrer en contact avec le métal en fusion. On choisit donc un produit de lutage capable de résister structurellement au contact du métal en fusion.

Le produit de lutage s'expanse dans la jonction pendant l'étape de préchauffage, comblant alors ladite jonction, puis le métal entre en contact avec le produit de lutage expansé pendant l'étape de moulage.

Lorsque la portée est recouverte par un feutre, l'expansion du produit de lutage compresse encore davantage le feutre. Ceci offre l'avantage de permettre au feutre de compenser la rétractation du produit de lutage lorsque ledit produit de lutage est en fin de vie.

Selon ce mode de réalisation, les caractéristiques structurelles et mécaniques des pièces de moule, et lorsqu'il est présent du feutre, sont adaptées de manière à éviter tout décollement des portées par rapport aux rails pouvant induire une mauvaise étanchéité du moule.

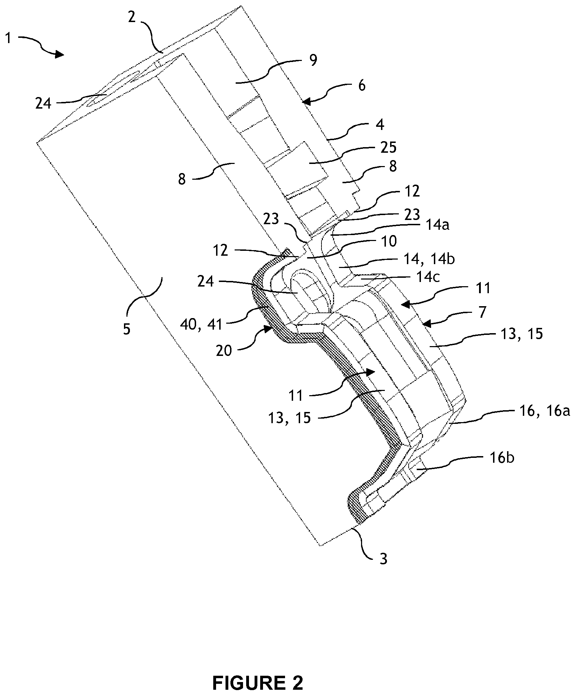

Selon un mode de réalisation préféré de l'invention, en référence aux Figures 2 et 3, le produit de lutage 40 est appliqué dans le renfoncement externe 20 délimité par une bordure interne 11 de la pièce de moule. Il est appliqué sur la deuxième surface 22 du renfoncement de manière à recouvrir ladite deuxième surface. De plus, en fonction de l'épaisseur de produit appliquée, celui-ci recouvre également, au moins partiellement, la première surface 21 du renfoncement. Dans le cas où le produit de lutage est une bande thermoformable 41 telle que représentée sur la Figure 3, la portion haute 42 de la bande a une forme correspondant à celle de la portée haute 14, et est appliquée sur celle-ci. De même, la portion intermédiaire 43 et la portion basse 44 de la bande 41 ont une forme correspondant à celles de la portée intermédiaire 15 et de la portée basse 16 respectivement, et sont appliquées sur celles-ci.

Il est bien sûr possible si besoin d'appliquer le produit de lutage 40 dans le renfoncement externe 20 de manière à ne recouvrir qu'une partie seulement de la deuxième surface 22, c'est-à-dire une partie de sa longueur qui s'étend depuis la rupture de pente 12 jusqu'à la face inférieure 3 de la pièce, et/ou une partie de sa largeur qui s'étend depuis la première surface 21 jusqu'à la surface latérale externe 5 de la pièce de moule. Cela peut s'avérer approprié si le produit de lutage n'est destiné qu'à isoler une partie seulement de l'empreinte de moulage 102, et réduit de fait le temps nécessaire à l'application dudit produit de lutage ainsi que la quantité de produit nécessaire.

Lors de l'étape de préchauffage du moule 100, la température au sein du moule augmente jusqu'à une température de préchauffage voisine de la température du métal en fusion coulé ultérieurement. La température de préchauffage peut notamment être égale à la température du métal liquide. La montée en température du moule lors du préchauffage provoque une augmentation de la température dans et à l'extérieur de l'empreinte de moulage 102, en particulier à proximité de l'empreinte de moulage. Lorsque la température seuil est atteinte, le produit de lutage 40 s'expanse et occupe alors tout le volume du renfoncement externe 20, empêchant le métal de sortir de l'empreinte de moulage 102 via la jonction entre les portées 13 des pièces de moule et les rails 30.

Ce qui a été décrit précédemment concernant l'application du produit de lutage sur une surface d'une pièce 1 de moule s'applique également à la pièce 50 de fond. Le produit de lutage peut s'appliquer ainsi en particulier sur les portées 18 de la pièce 50 de fond, conformément à ce qui vient d'être décrit, les portées 18 comprenant éventuellement un feutre.

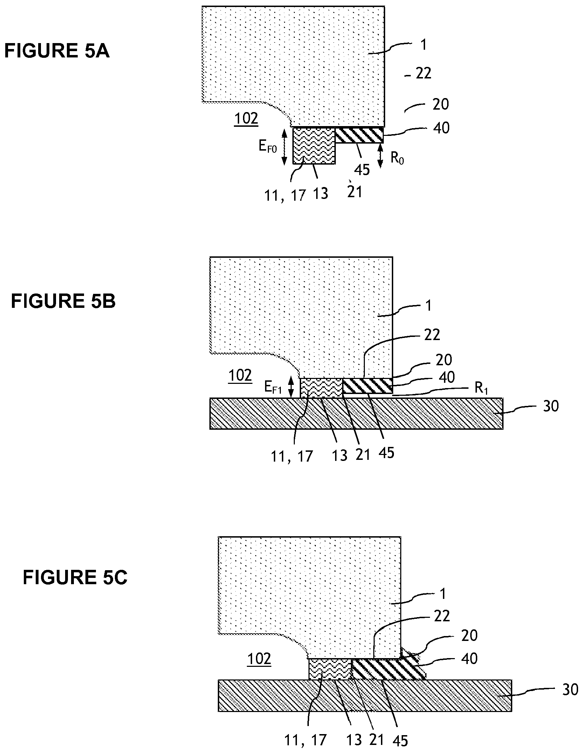

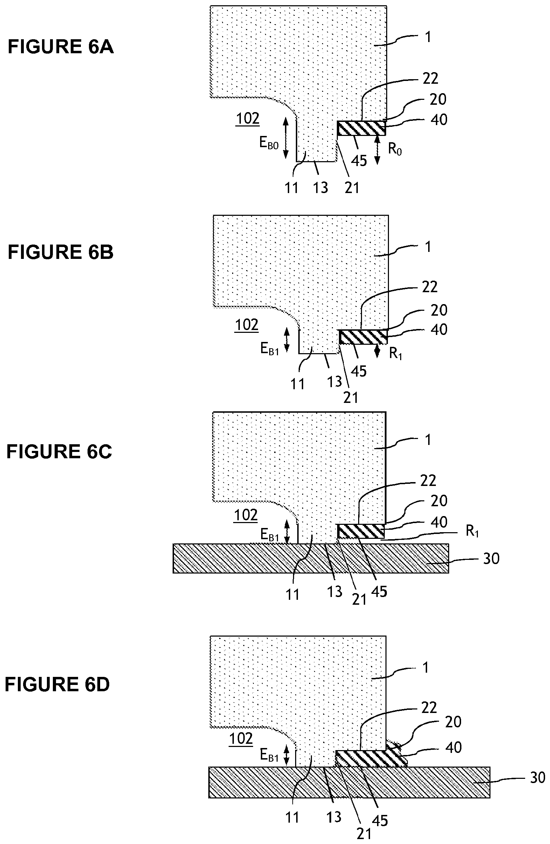

Les Figures 5A-C et 6A-D illustrent le comportement du produit de lutage lors de son application sur une pièce de moule conformément au mode de réalisation précédent, et lors de l'opération de moulage ultérieure. Le produit de lutage 40 est appliqué dans le renfoncement externe 20 délimité par une bordure interne 11 de la pièce de moule.

En référence aux Figures 5A, 5B, et 5C, le moule 100 est un moule avec feutre. La présence d'un feutre 17 permet de s'affranchir d'une étape parfois laborieuse de raccourcissement de l'épaisseur de la bordure interne 11, notamment par grattage de l'excès de sable lorsque la pièce est en sable aggloméré, afin d'ajuster la distance entre la pièce 1 de moule et les rails 30.

Conformément à la Figure 5A, une certaine quantité du produit de lutage 40 est appliquée dans le renfoncement externe 20, préalablement au montage du moule. Le feutre 17 constitue une bordure de la pièce de moule dont la portée 13 est destinée à venir au contact d'un rail 30 à souder. Le feutre 17 est à l'état libre (non comprimé) et possède une épaisseur prédéterminée notée E_{F0}. La portée 11 du feutre 17 et la surface 45 du produit de lutage en regard du rail sont décalés l'une par rapport à l'autre d'un retrait noté R₀.

Conformément à la Figure 5B, le montage de la pièce de moule sur le rail provoque la compression du feutre 17 dont l'épaisseur se réduit, passant de E_{F0} à E_{F1}. Le retrait R₀ diminue en fonction de la compression du feutre jusqu'à une valeur R₁. Le préchauffage du moule, préalablement à la coulée du métal, provoque l'expansion du produit de lutage 40 qui remplit alors le volume du renfoncement 20 et déborde légèrement à l'extérieur du renfoncement, comme l'illustre la Figure 5C.

Outre la préservation de son intégrité structurelle, le positionnement du produit de lutage 40 à l'extérieur de l'empreinte de moulage 102, et la présence de la bordure interne 11 munie d'un feutre séparant le produit de lutage et l'empreinte de moulage, permet d'éviter que le produit de lutage 40 ne s'expanse dans la jonction entre les portées 13 et les rails 30, ce qui pourrait aboutir à un effet inverse de celui recherché, à savoir un léger décollement des portées 13 par rapport aux rails 30 et une mauvaise étanchéité du moule.

Le retrait R₀ entre la portée 13 du feutre 17 et la surface 45 du produit de lutage est avantageusement choisi de manière à permettre une bonne compression du feutre. En d'autres termes, le feutre 17 doit pouvoir être compressé dans l'état de compression souhaité, sans toutefois que le produit de lutage 40 ne vienne au contact du rail 30 avant expansion. Lorsque le feutre 17 est compressé, le produit de lutage 40 demeure donc séparé du rail 30 par retrait R₁.

Le retrait R₁ subsistant après compression du feutre permet au produit de lutage de s'expanser convenablement dans tout le volume du renfoncement 20, sans trop déborder à l'extérieur dudit renfoncement.

En référence aux Figures 6A, 6B, 6C, et 6D, le moule est un moule sans feutre. La bordure interne 11 est donc constituée du même matériau que le reste de la pièce 1 de moule.

Conformément à la Figure 6A, une certaine quantité du produit de lutage 40 est appliquée dans le renfoncement 20, préalablement au montage du moule.

Conformément à la Figure 6B, la bordure interne 11 est ensuite raccourcie, par exemple en grattant l'excès de sable lorsque la pièce 1 est en sable aggloméré, afin d'ajuster de la manière souhaitée le contact entre la pièce 1 de moule et le rail 30. Ce faisant, l'épaisseur de la bordure 11 passe de E_{B0} à E_{B1}, et le retrait R₀ entre la portée de la bordure et la surface du renfoncement 20 en regard du rail diminue jusqu'à une valeur R₁.

De manière similaire au mode de réalisation précédent avec le moule en feutre, la bordure interne 11 sépare le produit de lutage 40 de l'empreinte de moulage 102, évitant ainsi tout contact direct entre le métal et le produit de lutage lors d'une étape ultérieure de coulée du métal dans le moule.

Par ailleurs, le retrait R₀ entre la portée 13 et la surface 45 du produit de lutage est avantageusement choisi de manière à permettre un raccourcissement prédéterminé de la bordure interne 11 afin de positionner la pièce 1 de moule à une distance souhaitée du rail 30. En d'autres termes, la bordure 11 doit pouvoir être raccourcie tel que souhaité, sans toutefois que le produit de lutage 40 ne vienne au contact du rail avant expansion. Lorsque la bordure 11 est raccourcie, le produit de lutage 40 demeure donc séparé du rail 30 par le retrait R₁.

Il va de soi que l'invention n'est pas limitée à la structure du moule telle qu'illustrée mais qu'elle s'applique à tout moule de soudure aluminothermique, quel que soit le nombre et la forme des pièces de moule le constituant. Par ailleurs, le produit de lutage intumescent peut être appliqué sur toutes les pièces de moule, ou sur seulement une partie d'entre elles.

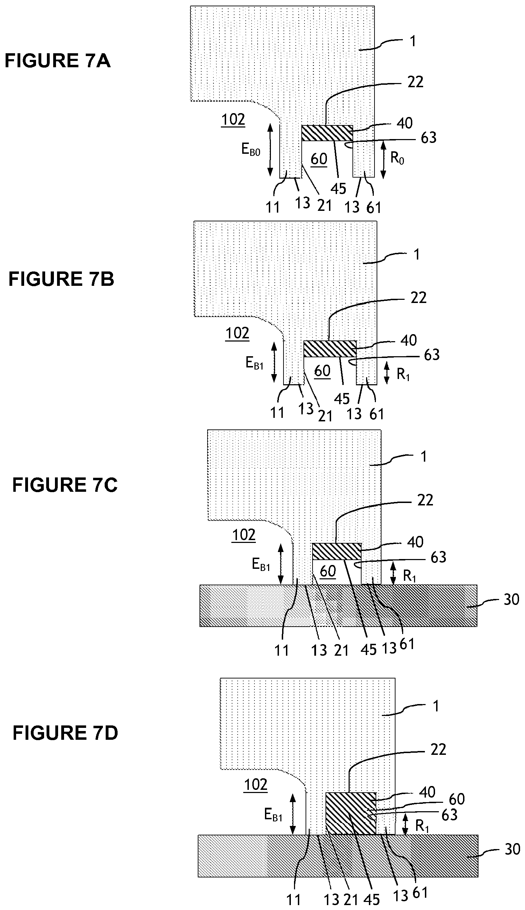

Les Figures 7A, 7B, 7C, et 7D illustrent le comportement du produit de lutage lors de son application sur une pièce de moule telle que décrite précédent, et lors de l'opération de moulage ultérieure. A la différence du mode de réalisation précédent décrit à l'appui des figures 6A à 6D, la portée 13 comprend une gorge 60 séparée de l'extérieur du moule. Selon le mode de réalisation représenté, la gorge 60 est délimitée à la fois par la bordure interne 11, mais également par une bordure externe 61 qui est agencée de manière adjacente et à distance de la bordure interne, relativement à la longueur du rail et qui sépare ladite gorge 60 de l'extérieur du moule.

Conformément à la figure 7A, une certaine quantité du produit de lutage 40 est appliquée dans la gorge 60, préalablement au montage du moule. Le produit de lutage peut être appliqué sur une ou plusieurs des surfaces de la gorge 60 que sont la première surface 21, la deuxième surface 22 qui forme le fond de la gorge, et la troisième surface 63 de la bordure externe 61.

Conformément à la Figure 7B, la bordure interne 11 et la bordure externe 61 sont ensuite raccourcies, par exemple en grattant l'excès de sable lorsque la pièce 1 est en sable aggloméré, afin d'ajuster de la manière souhaitée le contact entre la pièce 1 de moule et le rail 30. Ce faisant, l'épaisseur de la bordure interne 11 et de la bordure externe 61 passe de E_{B0} à E_{B1}, et le retrait R₀ entre la portée 13 et la surface 45 du produit de lutage 40 en regard du rail diminue jusqu'à une valeur R₁. Pour un bon ajustement du moule avec le rail, la bordure interne 11 et la bordure externe 61 sont raccourcies à la même épaisseur E_{B1}.

En référence aux figures 7C et 7D, la pièce 1 de moule est ensuite montée sur le rail 30 et le préchauffage du moule, préalablement à la coulée du métal, provoque l'expansion du produit de lutage 40 qui remplit alors le volume de la gorge 60.

La bordure externe 61 sépare le produit de lutage 40 de l'extérieur du moule, évitant ainsi tout débordement du produit de lutage hors de la gorge 60, à l'extérieur du moule, lors de son expansion.

La bordure interne 11 sépare le produit de lutage 40 de l'empreinte de moulage 102, évitant ainsi tout contact direct entre le métal et le produit de lutage lors d'une étape ultérieure de coulée du métal dans le moule.

Le retrait R₀ entre la portée 13 et la surface 45 du produit de lutage est avantageusement choisi de manière à permettre un raccourcissement prédéterminé de la bordure interne 11 et de la bordure externe 61 afin de positionner la pièce 1 de moule à une distance souhaitée du rail 30. En d'autres termes, la bordure interne 11 et la bordure externe 61 doivent pouvoir être raccourcies tel que souhaité, sans toutefois que le produit de lutage 40 ne vienne au contact du rail avant expansion. Lorsque la bordure interne 11 et la bordure externe 61 sont raccourcies, le produit de lutage 40 demeure donc séparé du rail 30 par le retrait R₁.

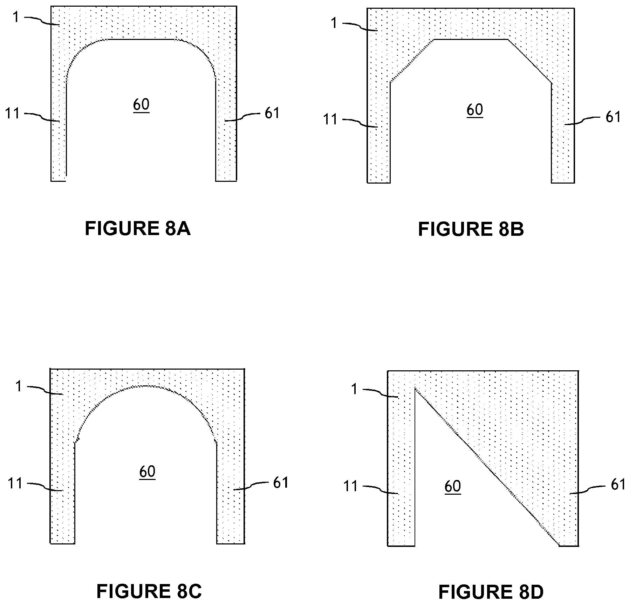

En référence aux figures 8A, 8B, 8C, et 8D, la gorge 60 peut se présenter sous différentes formes, tant qu'il y a une continuité des bordures interne 11 et externe 61 délimitant la gorge, étant entendu que la hauteur desdites bordures interne et externe est susceptible de varier le long de la gorge en fonction de l'épaisseur de sable à retirer pour ajuster le moule.

La gorge 60 peut être par exemple arrondie, polygonale, ou bien angulaire.

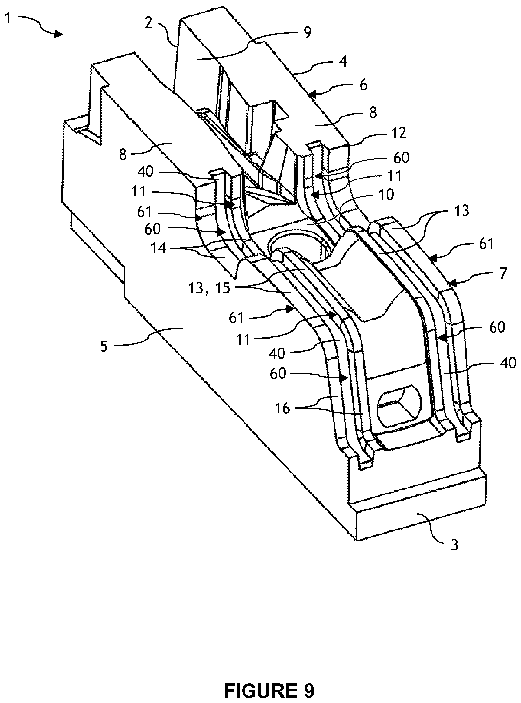

La figure 9 illustre une pièce de moule, dont la portée 13 comprend deux gorges 60, chacune étant séparée de l'empreinte de moulage par une bordure interne 11 et séparée de l'extérieur du moule par une bordure externe 61.

Le produit de lutage 40 est appliqué dans les gorges 60, préalablement au montage du moule. Le produit de lutage 40 recouvre le fond 22 de la gorge, et recouvre partiellement la première surface 21 de la bordure interne 11 et la troisième surface 63 de la bordure externe 61.

## Revendications

1. Ensemble de moulage pour la soudure aluminothermique de rails métalliques (30), comprenant au moins une pièce (1, 50) de moule configurée pour venir au contact d'au moins une autre pièce de moule (1, 50) et des rails (30) à souder afin de former une empreinte de moulage (102) adaptée pour y agencer les abouts (31) des rails métalliques à souder et adaptée pour y couler un métal en fusion pour réaliser la soudure des rails métalliques (30), chaque pièce de moule (1, 50) comprenant une portée (13) configurée pour être placée au contact d'au moins un desdits rails (30) et ladite portée (13) comprenant une gorge (60), l'ensemble de moulage étant **caractérisé en ce qu'**il comprend un produit de lutage (40) en un matériau intumescent adapté pour être appliqué dans ladite gorge (60).

2. Ensemble de moulage selon la revendication 1, dans lequel la gorge (60) comprend :
- une bordure interne (11), configurée pour fermer l'empreinte de moulage (102),
- une bordure externe (61) configurée pour séparer la gorge (60) de l'extérieur du moule,
- un fond qui s'étend en regard des rails (30) à souder, et qui relie la bordure interne (11) et la bordure externe (61).

3. Ensemble de moulage selon l'une des revendications 1 ou 2, dans lequel le produit de lutage (40) est en retrait par rapport à la portée (13) relativement au rail (30).

4. Ensemble de moulage selon l'une quelconque des revendications précédentes, dans lequel la pièce (1, 50) de moule comprend une pièce (50) de fond.

5. Ensemble de moulage selon l'une quelconque des revendications précédentes, dans lequel le produit de lutage (40) se présente sous la forme d'une bande (41).

6. Ensemble de moulage selon la revendication 5, dans lequel la bande est une bande thermoformée ou une bande obtenue par moulage.

7. Ensemble de moulage selon l'une des revendications 5 ou 6, dans lequel la bande est conformable à la pièce de moule.

8. Ensemble de moulage selon l'une quelconque des revendications précédentes, dans lequel le matériau intumescent est choisi parmi une ou plusieurs des substances chimiques suivantes : silicate de sodium, silicate de calcium, phosphate d'ammonium, et co-graphite extrudé.

9. Procédé de soudure aluminothermique de rails métalliques (30), dans lequel les abouts (31) des rails métalliques à souder sont agencés dans une empreinte de moulage (102) d'un moule (100) de soudure aluminothermique, ledit moule (100) comprenant au moins deux pièces (1, 50) de moule configurées pour venir au contact l'une de l'autre et des rails (30) à souder afin de former ladite empreinte de moulage (102), chaque pièce de moule (1, 50) comprenant une portée (13) configurée pour être placée au contact d'au moins un desdits rails (30), ladite portée (13) comprenant une gorge (60), le procédé comprenant une étape de coulée d'un métal en fusion dans l'empreinte de moulage (102), le procédé étant **caractérisé en ce qu'**il comprend, préalablement à l'étape de coulée du métal dans l'empreinte de moulage (102), une étape d'application d'un produit de lutage (40) fabriqué dans un matériau intumescent dans la gorge (60).

10. Procédé selon la revendication 9, comprenant une étape de préchauffage du moule (100) préalablement à l'étape de coulée du métal dans l'empreinte de moulage (102), le produit de lutage (40) étant appliqué avant ladite étape de préchauffage.

11. Procédé selon la revendication 9, dans lequel le produit de lutage (40) est appliqué avant l'assemblage des pièces (1, 50) du moule avec le rail (30) pour former l'empreinte de moulage (102).

12. Procédé selon la revendication 9, dans lequel le produit de lutage (40) est appliqué de manière à être en retrait par rapport à la portée (13), relativement au rail (30).

13. Procédé selon l'une des revendications 9 à 12, dans lequel le produit de lutage (40) se présente sous la forme d'une bande (41), le procédé comprenant une étape de mise en forme de la bande (41) préalablement à son application sur une pièce (1, 50) de moule.

14. Procédé selon la revendication 13, dans lequel la bande est une bande thermoformée ou une bande obtenue par moulage.

15. Procédé selon l'une des revendications 13 ou 14, dans lequel la bande est conformée à la pièce de moule lors de son application.

16. Procédé selon l'une quelconque des revendications 9 à 12, dans lequel le produit de lutage (40) se présente sous la forme d'un liquide, de préférence choisi parmi du mastic ou de l'enduit.

17. Procédé selon la revendication 16, comprenant en outre, avant la coulée du métal en fusion dans l'empreinte de moulage (102), une étape d'application du liquide sur ladite au moins une surface (21, 22) de la pièce (1, 50) de moule en regard du rail (30).

18. Procédé selon la revendication 17, dans lequel l'application du liquide est réalisée au moyen d'un pinceau, d'un couteau, d'un pistolet extrudeur, ou d'un piston haute pression.

19. Procédé selon l'une des revendications 9 à 18, dans lequel le matériau intumescent comprend du silicate de sodium.

## Patentansprüche

1. Gussanordnung zum aluminothermischen Schweißen von metallischen Schienen (30), die mindestens ein Formteil (1, 50) umfasst, das dazu ausgestaltet ist, mit mindestens einem anderen Formteil (1, 50) und zu schweißenden Schienen (30) in Kontakt zu gelangen, um einen Gussformhohlraum (102) zu bilden, der dazu angepasst ist, die Stirnseiten (31) der zu schweißenden metallischen Schienen darin anzuordnen, und dazu angepasst ist, ein geschmolzenes Metall dort hinein zu gießen, um die Schweißung der metallischen Schienen (30) auszuführen, wobei jedes Formteil (1, 50) einen Bereich (13) umfasst, der dazu ausgestaltet ist, im Kontakt mit mindestens einer der Schienen (30) platziert zu werden, und der Bereich (13) eine Rinne (60) umfasst, wobei die Gussanordnung **dadurch gekennzeichnet ist, dass** sie ein Abdichtungsmittel (40) aus einem Intumeszenzmaterial umfasst, das dazu angepasst ist, in der Rinne (60) aufgebracht zu werden.

2. Gussanordnung nach Anspruch 1, wobei die Rinne (60) Folgendes umfasst:
- einen inneren Rand (11), der dazu ausgestaltet ist, den Gussformhohlraum (102) zu schließen,
- einen äußeren Rand (61), der dazu ausgestaltet ist, die Rinne (60) von der Außenseite der Form zu trennen,
- einen Boden, der sich den zu schweißenden Schienen (30) gegenüberstehend erstreckt und der den inneren Rand (11) und den äußeren Rand (61) verbindet.

3. Gussanordnung nach einem der Ansprüche 1 oder 2, wobei das Abdichtungsmittel (40) sich in Bezug auf den Bereich (13) relativ zur Schiene (30) weiter hinten befindet.

4. Gussanordnung nach einem der vorhergehenden Ansprüche, wobei das Formteil (1, 50) ein Bodenteil (50) umfasst.

5. Gussanordnung nach einem der vorhergehenden Ansprüche, wobei das Abdichtungsmittel (40) die Form eines Bandes (41) aufweist.

6. Gussanordnung nach Anspruch 5, wobei das Band ein warmgeformtes Band oder ein Band ist, das durch Guss erhalten wird.

7. Gussanordnung nach einem der Ansprüche 5 oder 6, wobei das Band an das Formteil anpassbar ist.

8. Gussanordnung nach einem der vorhergehenden Ansprüche, wobei das Intumeszenzmaterial aus einem oder mehreren der folgenden chemischen Stoffe ausgewählt ist: Natriumsilikat, Calciumsilikat, Ammoniumphosphat und co-extrudiertes Graphit.

9. Verfahren zum aluminothermischen Schweißen von metallischen Schienen (30), wobei die Stirnseiten (31) der zu schweißenden metallischen Schienen in einem Gussformhohlraum (102) einer Form (100) zum aluminothermischen Schweißen angeordnet werden, wobei die Form (100) mindestens zwei Formteile (1, 50) umfasst, die dazu ausgestaltet sind, miteinander und mit den zu schweißenden Schienen (30) in Kontakt zu gelangen, um den Gussformhohlraum (102) zu bilden, wobei jedes Formteil (1, 50) einen Bereich (13) umfasst, der dazu ausgestaltet ist, im Kontakt mit mindestens einer der Schienen (30) platziert zu werden, wobei der Bereich (13) eine Rinne (60) umfasst, wobei das Verfahren einen Schritt des Gießens eines geschmolzenen Metalls in den Gussformhohlraum (102) umfasst, wobei das Verfahren **dadurch gekennzeichnet ist, dass** es vor dem Schritt des Gießens des Metalls in den Formhohlraum (102) einen Schritt des Aufbringens eines Abdichtungsmittels (40), das aus einem Intumeszenzmaterial hergestellt ist, in der Rinne (60) umfasst.

10. Verfahren nach Anspruch 9, das einen Schritt des Vorheizens der Form (100) vor dem Schritt des Gießens des Metalls in den Gussformhohlraum (102) umfasst, wobei das Abdichtungsmittel (40) vor dem Schritt des Vorheizens aufgebracht wird.

11. Verfahren nach Anspruch 9, wobei das Abdichtungsmittel (40) vor dem Zusammenbauen der Teile (1, 50) der Form mit der Schiene (30) zum Bilden des Gussformhohlraums (102) aufgebracht wird.

12. Verfahren nach Anspruch 9, wobei das Abdichtungsmaterial (40) derart aufgebracht wird, dass es sich in Bezug auf den Bereich (13) relativ zur Schiene (30) weiter hinten befindet.

13. Verfahren nach einem der Ansprüche 9 bis 12, wobei das Abdichtungsmittel (40) die Form eines Bandes (41) aufweist, wobei das Verfahren einen Schritt des Formgebens des Bandes (41) vor seinem Aufbringen auf ein Formteil (1, 50) umfasst.

14. Verfahren nach Anspruch 13, wobei das Band ein warmgeformtes Band oder ein Band ist, das durch Guss erhalten wird.

15. Verfahren nach einem der Ansprüche 13 oder 14, wobei das Band bei seinem Aufbringen an das Formteil angepasst wird.

16. Verfahren nach einem der Ansprüche 9 bis 12, wobei das Abdichtungsmittel (40) die Form einer Flüssigkeit aufweist, die vorzugsweise ausgewählt wird aus Kitt oder Putz.

17. Verfahren nach Anspruch 16, das ferner vor dem Gießen des geschmolzenen Materials in den Gussformhohlraum (102) einen Schritt des Aufbringens der Flüssigkeit auf der mindestens einen Oberfläche (21, 22) des Formteils (1, 50) der Schiene (30) gegenüberstehend umfasst.

18. Verfahren nach Anspruch 17, wobei das Aufbringen der Flüssigkeit mittels eines Pinsels, eines Messers, einer Extrusionspistole oder eines Hochdruckkolbens ausgeführt wird.

19. Verfahren nach einem der Ansprüche 9 bis 18, wobei das Intumeszenzmaterial Natriumsilikat umfasst.

## Claims

1. A mould assembly for thermite welding of metal rails (30), comprising at least one mould part (1, 50) configured to contact at least one other mould part (1, 50) and the rails (30) to be welded to form a mould cavity (102) adapted to arrange the ends (31) of the metal rails to be welded therein and adapted to pour molten metal therein to effect the welding of the metal rails (30), each mould part (1, 50) comprising a bearing surface (13) configured to be placed in contact with at least one of said rails (30) and said bearing surface (13) comprising a groove (60), the moulding assembly being **characterised in that** it comprises a luting product (40) of an intumescent material adapted to be applied in said groove (60).

2. The moulding assembly of claim 1, wherein the groove (60) comprises:
- an inner edge (11), configured to close the moulding cavity (102),
- an outer edge (61) configured to separate the groove (60) from the exterior of the mould,
- a base which extends opposite the rails (30) to be welded, and which connects the inner edge (11) and the outer edge (61).

3. A moulding assembly according to any of claims 1 or 2, wherein the luting product (40) is recessed from the bearing surface (13) relative to the rail (30).

4. A moulding assembly according to any of the preceding claims, wherein the mould part (1, 50) comprises a bottom part (50).

5. A moulding assembly according to any one of the preceding claims, wherein the luting product (40) is in the form of a strip (41).

6. The moulding assembly of claim 5, wherein the strip is a thermoformed strip or a moulded strip.

7. The moulding assembly of any of claims 5 or 6, wherein the strip is conformable to the mould part.

8. A moulding assembly according to any of the preceding claims, wherein the intumescent material is selected from one or more of the following chemicals: sodium silicate, calcium silicate, ammonium phosphate, and extruded co-graphite.

9. A method for thermite welding of metal rails (30), wherein the ends (31) of the metal rails to be welded are arranged in a mould cavity (102) of a thermite welding mould (100), said mould (100) comprising at least two mould parts (1, 50) configured to contact each other and the rails (30) to be welded to form said mould cavity (102), each mould part (1, 50) comprising a bearing surface (13) configured to be placed in contact with at least one of said rails (30), said bearing surface (13) comprising a groove (60), the method comprising a step of pouring a molten metal into the moulding cavity (102), the method being **characterised in that** it comprises, prior to the step of pouring the metal into the moulding cavity (102), a step of applying a luting product (40) made of an intumescent material in the groove (60).

10. A method according to claim 9, comprising a step of preheating the mould (100) prior to the step of casting metal into the mould cavity (102), the luting product (40) being applied prior to said preheating step.

11. A method according to claim 9, wherein the luting product (40) is applied prior to the assembly of the mould parts (1, 50) with the rail (30) to form the moulding cavity (102).

12. A method according to claim 9, wherein the luting product (40) is applied so as to be set back from the bearing surface (13), relative to the rail (30).

13. A method according to any of claims 9 to 12, wherein the luting product (40) is in the form of a strip (41), the method comprising a step of shaping the strip (41) prior to its application to a mould part (1, 50).

14. A method according to claim 13, wherein the strip is a thermoformed strip or a strip obtained by moulding.

15. A method according to any of claims 13 or 14, wherein the strip is conformed to the mould part as it is applied.

16. A method according to any one of claims 9 to 12, wherein the luting product (40) is in the form of a liquid, preferably selected from putty or plaster.

17. A method according to claim 16, further comprising, prior to pouring the molten metal into the moulding cavity (102), a step of applying the liquid to said at least one surface (21, 22) of the mould part (1, 50) facing the rail (30).

18. The method according to claim 17, wherein the application of the liquid is carried out by means of a brush, a knife, an extruder gun, or a high pressure piston.

19. A method according to any of claims 9 to 18, wherein the intumescent material comprises sodium silicate.
